# EUROPEAN PATENT APPLICATION

(11) **EP 4 243 233 A1**
(43) Date of publication of application: **13.09.2023**
(21) Application number: 22161048.8
(22) Date of filing: 09.03.2022
(51) Int. Cl.: H02J 3/00, H02J 3/38

(54) **CONTROL SYSTEM FOR A POWER PLANT AND METHOD FOR CONTROLLING A POWER PLANT IN CASE OF A FAULT RIDE THROUGH**

(71) Applicant: Siemens Gamesa Renewable Energy A/S, 7330 Brande (DK)
(72) Inventor: Gkountaras, Aris, 22299 Hamburg (DE); Chaudhary, Abhishek, 7330 Brande (DK)
(74) Representative: SGRE-Association

(57) **Abstract**

The invention relates to a control system for a renewable energy power plant (100). The power plant (100) comprises an energy generating system (10) configured to supply power to a utility grid (200) and having a wind farm (11) with at least one wind turbine (WT) and/or an energy storage system (12) with at least one energy storage device (SD). Furthermore, it comprises a load system (20) configured to consume and transform energy provided from the energy generating system (10) and/or the utility grid (200) at each point of time and having at least one load (EL). The control system comprises a fault response system (300) configured to monitor the status of the energy generating system (10), monitor the status of the load system (20), and generate an energy generating system power profile (DP₁₁, DP₁₂) in dependence of a given load system power profile (DP₂₀) following a voltage deviation of the utility grid (200) for controlling the energy generating system (10) based on the monitored statuses of the energy generating system (10) and the load system (20) to match a given power plant power profile (DP₁₀₀).

## Description

The present invention relates to a control system and a control method for a renewable energy power plant.

Renewable energy power plants, such as wind power plants, are expected to conform to particular requirements of a utility grid to which they are connected. One of the requirements is the requirement to respond in case of voltage deviations with an appropriate manner, which is known as "fault ride through". This requires that the renewable energy power plant, for example the wind turbines of a wind farm, has to return to its previous operating point with regard to its active power output after clearance of the fault causing the voltage deviation.

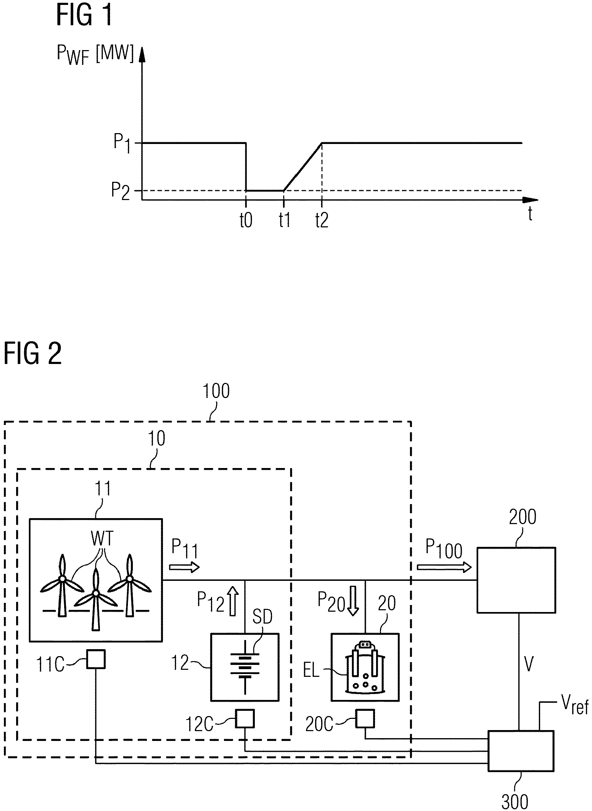

During a voltage dip, active power falls, and so must be ramped back up to pre-fault levels after the utility grid recovers from the fault. This is shown in the power-time-diagram of Fig. 1 where the power profile of a wind farm is shown. P_{WF} indicates the output power of the wind farm. At time t = t0, a voltage fault occurs. At t = t1 the voltage fault is cleared. At t = t0, as a reaction to the voltage fault, the active power of the wind farm P_{WF} falls from a pre-fault level P₁ to a fault level P₂. The output power of the fault level P₂ remains constant until the voltage fault is cleared at t = t1. At t = t2 the active power of the wind farm P_{WF} is ramped up to its prior operating point, i.e. a power corresponding to pre-fault output power P₁. Ramping up to pre-fault output power level has to be made in a manner that does not produce any adverse effects on the utility grid.

One possible solution is to control the ramping up of active power of wind farms by operating power dissipation systems or resistor systems known as chopper circuits at the wind turbine generators to dissipate power generated by the wind turbines until active power has returned to pre-fault levels.

However, renewable energy power plants are getting more complex due to further components such as energy storing systems and/or load systems. Although wind turbines of a wind farm and energy storage devices of an energy storage system, with the assistance of the power dissipating elements can ride through the fault to arrive at the desired ramping up of active power, the further components of the renewable energy power plant might counteract the desired performance. Hence, a control mechanism is needed to coordinate the response of all elements of a renewable energy power plant.

US 2021/0281070 A1 discloses a method for operating a renewable energy power plant where the renewable energy power plant comprises a plurality of renewable energy generators configured to supply power to an external grid, a plurality of power dissipation systems operable to dissipate power generated by the renewable energy generators, and a battery storage system operable to absorb power generated by the renewable energy generators. The method comprises monitoring the statuses of the power dissipation systems, performing a ramped active power recovery operation following a voltage deviation, and controlling the battery storage system during the ramped active power recovery operation to absorb power generated by the renewable energy generators in dependence of the monitored statuses of the power dissipation systems.

The method enables enhanced grid stability in case of extremely weak grids (Short Circuit Ratio SCR < 3). Power dissipation systems used for enhanced fault ride through are active during the fault event to absorb additional active power coming from the wind turbines. However, a drawback from the method described is that only power plants consisting of renewable energy generators and battery storage systems are addressed.

EP 2 733 811 A2 discloses a method of controlling a power plant comprising a power production facility connected to a power storage facility. The method comprises receiving or obtaining a reactive power grid demand and/or voltage grid demand of the electricity grid, obtaining operating data for the power plant facilities, computing reactive power and/or voltage references for the power plant facilities on the basis of the grid demands and the operating data, and operating the power plant facilities on the basis of the references such that a net reactive power and/or a net voltage at a point of connection satisfies the grid demands in order to fulfill relevant grid requirements.

It is an object of the present invention to enable a renewable energy power plant comprising a plurality of different energy generating and consuming components to coordinate the response of each component during the recovery period in case of a fault ride through.

This object is solved by a control system according to the features of claim 1 and a control method according to the features of present claim 12. Preferred embodiments are set out in the dependent claims.

The renewable energy power plant which is to be controlled by a control system according to the invention comprises an energy generating system configured to supply power to a utility grid and having a wind farm with at least one wind turbine and/or an energy storage system with at least one energy storage device, and a load system configured to consume and transform energy provided from the energy generating system and/or the utility grid at each point of time and having at least one electrical load.

The control system comprises a fault response system configured to monitor the status of the energy generating system, configured to monitor the status of the load system, and configured to generate an energy generating system power profile in dependence of a given load system power profile following a voltage deviation of the utility grid for controlling the energy generating system based on the monitored statuses of the energy generating system and the load system to match a given power plant power profile.

The control system is based on the consideration that energy generating systems solely comprising a wind farm and/or an energy storage system can ride through a fault causing a voltage deviation with a desired performance. For example, wind turbines of a wind farm may make use of power dissipating elements, such as chopper circuits. However, the components of a load system can experience internal limitations that prohibit them from recovering to their previous operating as fast as required form grid codes.

The control system as suggested coordinates the response of each component of the renewable energy power plant during the recovery period so that the total power plant rides through a potential voltage fault unaffected from components having a slower dynamic, such as electric loads. Hence, the control system ensures that the power plant as a whole rides through the fault after clearing the voltage deviation unaffected from the dynamics of slower components.

According to a preferred embodiment of the present invention, the power plant profile is set such that, at each point of time following the voltage deviation, a power output of the power plant does not exceed the power output before the voltage deviation. This is achieved by generating appropriate energy generating system power profiles in dependence of a given load system power profile following the voltage deviation.

According to a further preferred embodiment, the load system power profile is set such that, at each point of time following the voltage deviation, the power consumption of the load system ramps up to the power consumption before the voltage deviation. In particular, the load system power profile may be set such that ramping up the power consumption starts immediately after clearance of the fault causing the voltage deviation or with a time delay. Due to the nature of the load system, time to reach pre-fault level is longer compared to the components of the energy generating system.

Preferably, the status of the load system comprises an information about the power consumed by the load system, in particular at the time before the voltage deviation. The power consumed by the load system at a time before the voltage deviation (pre-fault level) has to be reached by the ramping up after clearance of the voltage deviation.

According to a further preferred embodiment, the status of the load system comprises an information about the load system power profile in case of a fault causing the voltage deviation. The load system power profile may be given by the utility grid operator and/or the manufacturer of the load system. However, the load system power profile may be predetermined by the utility grid operator.

According to a further preferred embodiment, the status of the energy generating system comprises an information about the current output power of each wind turbine of the wind farm. Analogously, the status of the energy generating system may comprise an information about a current output power of each energy storage device of the energy storage system. Multiplied by the number of available wind turbines and energy storage devices, respectively, the total available output power of the wind farm and the load system can be calculated as input information for generating the energy generating system power profile in dependence of a given load system power profile following the voltage deviation.

It is to be understood that the step of generating an energy generating system power profile comprises generating a respective profile for each component of the energy generating system. If the energy generating system solely consists of wind turbines of a wind farm, respective energy generating system power profiles for each wind turbines are generated. Alternatively, if the energy generating system solely consists of the energy storage system with one or a plurality of energy storage devices, a respective energy generating system power profile is generated for each of the energy storage devices. In case the energy generating system consists of both, wind turbine(s) of a wind farm and energy storing device(s) of the energy storage system, respective energy generating system power profiles are generated for each of the components.

According to a further preferred embodiment, the status of the energy generating system comprises an information about a number of available wind turbines of the wind farm following clearance of the voltage deviation.

The energy storage device may be one of a battery, a flywheel or supercapacitor.

The distribution of energy storage devices within the power plant is arbitrary. For example, the energy storage device may be integrated in a corresponding wind turbine. Analogously, respective loads of the load system may be integrated inside an individual wind turbine. A plurality of loads can be distributed in several locations in the renewable energy power plant. It is not necessary, but possible, to concentrate a plurality of loads of the load system in a central point, for example the grid connection point, of the renewable energy power plant.

The issues as described above are also addressed by a control method for a renewable energy power plant according to the features of present claim 12.

In this method, the status of the energy generating system is monitored. Further, the status of the load system is monitored. An energy generating system power profile is generated in dependence of a given load power profile following a voltage deviation of the utility grid for controlling the energy generating system based on the monitored statuses of the energy generating system and the load system to match a given power plant power profile.

With the method described, the renewable energy power plant as a whole rides through a fault after clearing the voltage deviation unaffected from the dynamics of the load system.

Preferably, the power plant power profile is set such, that at each point of time following the voltage deviation, a power output does not exceed the power output before the voltage deviation.

In a further preferred embodiment, the load system power profile is set such that, at each point of time following the voltage deviation, the power consumption of the load system ramps up to the power consumption before the voltage deviation. Due to the nature of the load system, time to reach pre-fault level is longer compared to the components of the energy generating system.

Moreover, the invention refers to a computer program product with a program code which is stored in a non-transitory machine-readable carrier, for carrying out the method according to the invention or one or more preferred embodiments thereof when the program code is executed on a computer.

Embodiments of the invention are described hereinafter in an exemplary way in the following figures, wherein:
- Fig. 1: shows a power-time-diagram illustrating the known behavior of a wind turbine in case of a fault ride through;
- Fig. 2: schematically shows an embodiment of a control system for a renewable power plant comprising an energy generating system and a load system as well as their connection to a utility grid;
- Fig. 3: shows power-time-diagrams of different components of the renewable energy power plant of Fig. 2 in case of a fault ride through without using a control algorithm according to the present invention;
- Fig. 4: shows power-time-diagrams of different components of the renewable energy power plant of Fig. 2 in case of a fault ride through using a control algorithm according to a first embodiment;
- Fig. 5: shows power-time-diagrams of different components of the renewable energy power plant of Fig. 2 in case of a fault ride through using a control algorithm according to a second embodiment; and
- Fig. 6: schematically shows high level inputs and outputs of a frequency response system of the control system for a coordinated response of the components of a renewable energy power plant in case of a fault ride through.

Fig. 2 illustrates a schematic diagram of a control system for a renewable energy power plant 100. The energy power plant 100 comprises an energy generating system 10 configured to supply power to a utility grid 200. In the present embodiment, the energy generating system comprises a wind farm 11 and an energy storage system 12. The wind farm 11 comprises one or a plurality of wind turbines WT, where the number n of wind turbines WT is arbitrary. As known to the person skilled in the art, each of the wind turbines WT is associated with a respective wind turbine controller (not shown). In some embodiments, a set of wind turbines may share a single, semi-centralized wind turbine controller such that there are viewer wind turbine controllers than wind turbines. For illustration purposes only, the wind turbine controllers are represented by a single wind turbine controller 11C.

The energy storage system 12 comprises one or more energy storage devices SD. Each energy storage device SD may be of a battery, a flywheel or a supercapacitor. Although in the present embodiment the energy storage devices SD of the energy storage system 12 appears to be centralized, in some embodiments, a respective energy storage device SD may be integrated in a respective wind turbine WT.

In a further alternative embodiment, the energy generating system 10 may either comprise only the wind farm 11 with one or a plurality of wind turbines WT or an energy storage system 12 with one or a plurality of energy storage devices SD.

Each of the energy storage devices SD is associated with a respective energy storage device controller (not shown). In some embodiments, a set of energy storage devices SD may share a single, semi-centralized energy storage device controller such there are viewer energy storage device controllers than energy storage devices SD. For illustration purposes only, the energy storage device controllers are represented by a single energy storage device controller 12C.

Besides the energy generating system 10, the energy power plant 100 comprises a load system 20. The load system 20 comprises one or a plurality of electrical loads EL. The load system 20 is configured to consume and transform energy provided from the energy generating system 10 and/or the utility grid 200 at each point of time, when in use. In no case the electrical load(s) EL of the load system 20 may produce power and supply it to the utility grid 200 or the energy storage system 12. The energy and consumed power of the load system 20 is therefore negative. The electrical loads EL of the load system may be, for example, electrolyzers. The electrical loads EL of the load system 20 may be of any other type.

The number of electrical loads EL is arbitrary. In the present embodiment, a centralized load system 20 is connected to the utility grid 200. In some embodiments, electric loads EL may be integrated inside an individual wind turbine WT. In further embodiments, electrical loads EL may be distributed in several locations of the power plant 100.

Each of the electrical loads EL is associated with a respective controller (not shown). In some embodiments, a set of electrical loads EL may share a single, semi-centralized load controller such that are viewer electrical load controllers than electrical loads EL. In the present embodiment, the load controller 20C represents the electrical load controllers as described above.

As already described, the wind farm 11, the energy storage system 12 and the load system 20 are connected to the utility grid 200 thereby supplying power P₁₀₀ to the utility grid. P₁₀₀ represents the combined power output provided from the power plant 100 to the utility grid 200. The combined power output P₁₀₀ of the power plant 100 results from the output power P₁₁ of the wind farm 11, the output power P₁₂ of the energy storage system 12 (shown in Fig. 2 in a positive direction meaning that the energy storage system 12 is discharged) and output power P₂₀ of the load system 20 (shown in the negative direction meaning that the load system 20 is consuming power and energy).

The control system for the power plant 100 comprises a fault response system 300 configured to monitor the status of the energy generating system 10 and the status of the load system 20. To that end, the fault response system 300 is communicatively coupled to the wind turbine controller 11C, the energy storage system controller 12C and the load system controller 20C. The fault response system 300 is configured to receive status data from these controllers 11C, 12C, 20C with respect to operation data and output power. In addition, the fault response system 300 is configured to generate control signals (setpoints) in dependence of the obtained operational data from the wind farm 11, the energy storage system 12 and the load system 20.

In addition, the fault response system 300 obtains at least one electrical property data of the utility grid 200 as input. Voltage of the utility grid 200 is one example of the electrical property data V. The fault response system may be configured for comparison of the obtained electrical property data V with respective reference values V_{ref} and, based on the comparison, to generate a wind farm power profile DP11 and energy storage system profile DP12 to control the entities of the wind farm 11 and the energy storage system 12, respectively, with respect to active power. The power profiles DP11, DP12 are generated if a fault followed by a voltage deviation of the utility grid 200 is detected.

In an alternative embodiment, the fault response system 300 may receive the result of the comparison from a different control unit, such that the result of the comparison indicates a voltage deviation.

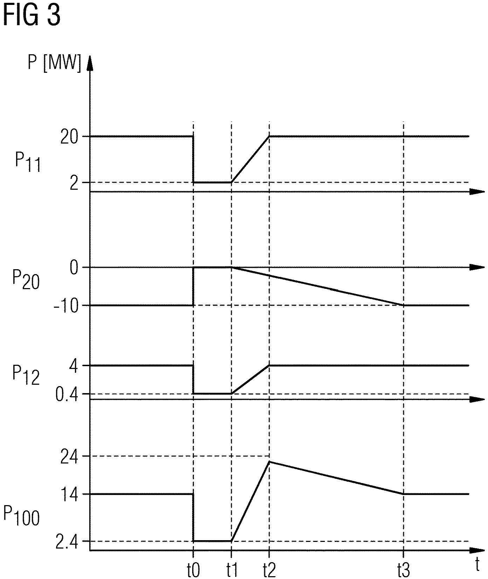

Generally, grid connected wind power plants are obliged to respond in case of voltage deviations with an appropriate manner which is called fault ride through (FRT). In particular, the wind turbines WT of the wind farm 11 have to return to their previous operating point with regard to their active power output after fault clearance as shown in Fig. 3. This behavior corresponds to already described Fig. 1.

Fig. 3 illustrates the power outputs P₁₁ of the wind farm 11, P₂₀ of the load system 20, P₁₂ of the energy storage system and P₁₀₀ of the combined power output of the power plant 100. As in Fig. 1, the fault causing a voltage deviation occurs at t = t0. At t = t0, the voltage fault is cleared. At t = t2, the components of the power plant 100 have to return to their prior operating point according to a given grid code.

In Fig. 3, the behavior of the wind farm 11, the energy storage system 12 and the load system 12 show their normal behavior without having implemented the control strategy according to the invention. In this embodiment, the wind turbines WT produce output power of P₁₁ = 20 MW prior to the fault. Between t0 and t1, i.e. during the fault, the output power P₁₁ = 2 MW because of the voltage drop of the utility grid 200. This value depends on the value of the residual voltage during the fault. Between t1 and t2 the output power P₁₁ returns to 20 MW after the fault is cleared at t1.

The electrical loads EL consume prior to fault P₂₀ = 10 MW (i.e. P₂₀ = -10 MW). During the fault, the electrical loads EL are shut down for protection purposes. Alternatively, they could be consuming a fraction of their previous operating point. After the fault clearance, the electrical loads EL of the load system 20 slowly ramp up to their previous operating point which is arrived at t = t3 with P₂₀ = -10 MW.

The energy storage devices SD produce prior to the fault P₁₂ = 4 MW during the fault P₁₂ = 0.4 MW because of the voltage drop, where the output power returns to P₁₂ = 4 MW after the fault is cleared. Ramping up to the pre-fault output power of the energy storage system 20 takes place at t = t2, i.e. at the same time ramping up of the wind farm 11 has ended.

As can be easily seen from the diagram of the output power P₁₀₀ of the power plant 100, the resulting output power of the power plant 100 leads to an overproduction of a bit less than 10 MW (24 MW - 14 MW) compared to the situation prior to the fault. This situation remains during t2 and t3 until the load system 20 ramps up to is prior value at t₃. At certain cases, t3 could be minutes after the fault event.

This situation results from internal limitations of the electrical loads EL of the load system 20 that prohibit them from recovering to the previous operating as fast as required from grid codes. This behavior is undesired because it can result in instability and voltage oscillations of the utility grid 200.

It is to be understood that the mentioned power outputs P₁₁, P₁₂, P₂₀ and P₁₀₀ of the wind farm 11, the energy storage system 12, the load system 12 and the power plant 100 are only used for description purposes. The power outputs of the components and the resulting combined power output could be chosen differently.

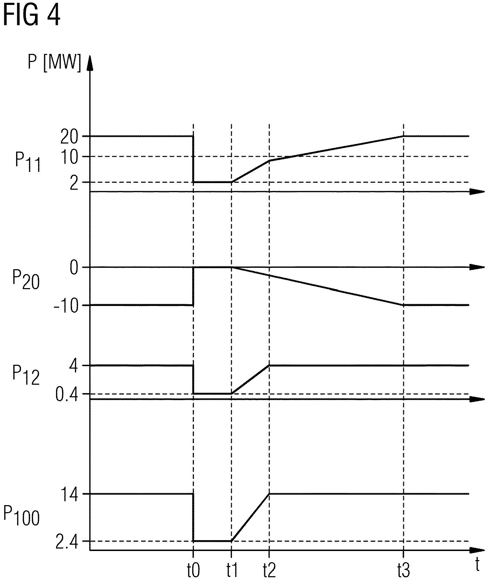

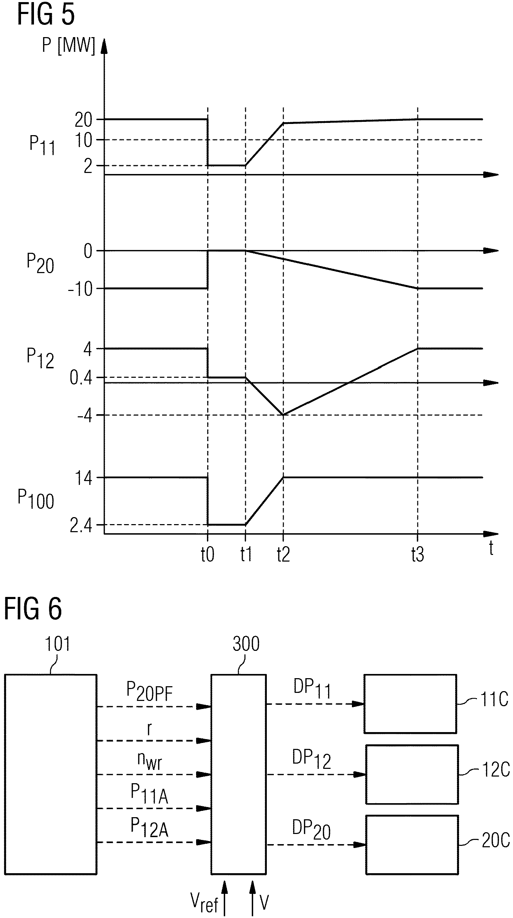

Figs. 4 and 5 show power-time-diagrams illustrating the power outputs of the components of the power plant 100 as described in connection with Fig. 2 where, in contrast, a control method according to the invention is implemented.

The fault response system 300 has a control algorithm implemented that coordinates the fault ride through performance of the power plant 100 with its components with different dynamic, such as electrical loads (for example electrolyzers) and wind turbines and/or storage devices. The control algorithm implemented in the fault response system 300 calculates, depending on the characteristics of the load system 20 and the input values, appropriate distribution of setpoints resulting in the power profiles DP₁₁, DP₁₂ for the wind turbines WT of the wind farm and the energy storing devices SD of the storage system, respectively, so that the total energy of the power plant 100 rides through a potential voltage fault unaffected from slower dynamics of the electric loads EL of the load system 20.

To do so, the fault response system 300 monitors the status of the energy generating system, i.e. of the wind turbines WT of the wind farm 11, and the energy storage devices SD of the energy storage system. In addition, the fault response system 300 monitors the status of the load system 20, i.e. the electric loads EL of the load system. It generates the power profiles DP₁₁, DP₁₂ for the wind turbines WT of the wind farm 11 and/or the energy storing devices SD of the energy storage system, respectively, in dependence of a given load system power profile DP₂₀ following the voltage deviation of the utility grid 200 for controlling the components of the energy generating system 10 based on the monitored statuses of components of the energy generating system 10 and the load system 20 to match a given power plant profile DP₁₀₀.

The respective power plant profiles DP₁₁, DP₁₂, DP₂₀ and DP₁₀₀ are outlined in Figs. 4 and 5.

The power plant profile DP₁₀₀ is set such that, at each point of time following the voltage deviation (i.e. after t0), a power output P₁₀₀ of the power plant 100 does not exceed the power output before the voltage deviation. In the present example, the pre-fault power output of the power plant 100 is 14 MW. The power profile DP₂₀ of the load system 20 may be predefined by a grid operator. It may be result of technical limitations of the components of the load system 20. As described in connection with Fig. 3, ramping up from P₂₀ = 0 MW to P₂₀ = -10 MW after the fault is cleared at t = t1 is given. Generally, the load system power profile DP₂₀ is set such that, at each point of time following the voltage deviation (i.e. after t0), the power consumption of the load system 20 ramps up to the power consumption before the voltage deviation.

Fig. 4 shows the situation, where ramping up the power consumption starts immediately after clearance of the fault (i.e. at t = t1). In an alternative which is not shown in the embodiments, ramping up the power consumption of the load system 20 may start with a time delay.

As can be easily seen from a comparison of Fig. 4 and Fig. 3, the output power P₁₁ of the wind farm 11 is "slowed down". At t = t2, the power output P₁₁ is adapted to ≈ 10 MW to match the behavior of the load system 20. This enables to return at t = t2 to the pre-fault power output P₁₀₀ of the power plant.

Again, the mentioned power outputs P₁₁, P₁₂, P₂₀ and P₁₀₀ of the wind farm 11, the energy storage system 12, the load system 12 and the power plant 100 are only used for description purposes. The power outputs of the components and the resulting combined power output could vary from the example described.

Fig. 5 illustrates an embodiment, where the wind turbines WT of the wind farm 11 have a steeper recovery ramp while the electrical storage system 12 shortly absorbs power (resulting in negative output power). As a result, power plant 11 has the desired power output between t₁ and t₃.

Fig. 6 shows schematically a diagram of high-level inputs and outputs of the control system and its fault response system 300 for a coordinated fault ride through, as described above. 101 represents the totality of controllers of the wind farm 11, energy storage system 12 and load system 20. The data may be provided from wind farm controllers 11C, energy storage controllers 12C and electrical loads controller 20C. Some other information may be provided from additional controllers such as wind farm controller, energy storage system controller and load system controller.

P_{20PF} represents the consuming power of the electric load system 20, shortly before the fault. r represents the recovery ramp of the electrical load system 20 in case of a fault (corresponding to the power profile DP₂₀ in Figs. 4 and 5). n represents the number of active wind turbines WT. P_{11A} represents the output power of each available wind turbine WT. P_{12A} represents the power of each available energy storage device SD. In addition, electrical property data V and corresponding reference value V_{ref} may be provided as input data to the fault response system 300.

Using the mentioned input information, the fault response system 300 generates the power profile DP₁₁ for the wind turbines WT of the wind farm 11 which each wind turbine WT has to follow during the recovery period in case of a fault to match the total/partial power profile of the electrical load system 20 during the same period. The power profile DP₁₁ is provided to the wind turbine controllers 11C.

The fault response system 300 furthermore generates the power profile DP₁₂ for the energy storage devices SD of the energy storage system 12, which each storage device 12 has to follow during the recovery period in case of a fault to match the total/partial power profile of the electrical load system during the same period. The electrical load power profile DP₁₂ is provided to the energy storage device controller(s) 12C.

DP₂₀ represents the power profile that each electrical load EL of the load system 20 has to following during the recovery period as soon as possible. The power profile DP₂₀ is provided to the electrical load controller(s) 20C. It may be predetermined and given by the utility grid operator.

It is to be understood that if there are further loads present in the power plant 100, such as power dissipation devices and chopper circuits, that are faster than the electrical loads DL of the load system 20 and are able to absorb power earlier, they can also be integrated in the control algorithm.

The control method is agnostic to the electrical load technology and covers both, slow and fast acting load systems. However, it focusses to coordinate active loads inside the power plant 100.

The proposed coordinated control method is agnostic to power generating units which can be wind turbines of a wind farm and/or photovoltaic generators and/or synchronous machines and/or fuel cells.

## Claims

1. A control system for a renewable energy power plant (100), the power plant (100) comprising
- an energy generating system (10) configured to supply power to a utility grid (200) and having a wind farm (11) with at least one wind turbine (WT) and/or an energy storage system (12) with at least one energy storage device (SD), and
- a load system (20) configured to consume and transform energy provided from the energy generating system (10) and/or the utility grid (200) at each point of time and having at least one load (EL),
the control system comprising a fault response system (300) configured to
- monitor the status of the energy generating system (10);
- monitor the status of the load system (20); and
- generate an energy generating system power profile (DP₁₁, DP₁₂) in dependence of a given load system power profile (DP₂₀) following a voltage deviation of the utility grid (200) for controlling the energy generating system (10) based on the monitored statuses of the energy generating system (10) and the load system (20) to match a given power plant power profile (DP₁₀₀).

2. The control system according to claim 1, wherein the power plant power profile (DP₁₀₀) is set such that, at each point of time following the voltage deviation, a power output of the power plant (100) does not exceed the power output before the voltage deviation.

3. The control system according to claim 1 or 2, wherein the load system power profile (DP₂₀) is set such that, at each point of time following the voltage deviation, the power consumption of the load system (20) ramps up to the power consumption before the voltage deviation.

4. The control system according to claim 3, wherein the load system power profile (DP₂₀) is set such that ramping up the power consumption starts immediately after clearance of the fault causing the voltage deviation or with a time delay.

5. The control system according to one of the preceding claims, wherein the status of the load system (20) comprises an information about the power consumed by the load system, in particular at the time before the voltage deviation.

6. The control system according to one of the preceding claims, wherein the status of the load system (20) comprises an information about the load system power profile in case of a fault causing the voltage deviation.

7. The control system according to one of the preceding claims, wherein the status of the energy generating system (10) comprises an information about a current output power of each wind turbine (WT) of the wind farm (11).

8. The control system according to one of the preceding claims, wherein the status of the energy generating system (10) comprises an information about a current output power of each energy storage device (SD) of the energy storage system (12) .

9. The control system according to one of the preceding claims, wherein the status of the energy generating system (10) comprises an information about the number of available wind turbines (WT) of the wind farm (11) following clearance of the voltage deviation.

10. The control system according to one of the preceding claims, wherein the energy storage device (SD) is one of a battery, a flywheel or a supercapacitor.

11. The control system according to one of the preceding claims, wherein the energy storage device (SD) is integrated in the wind turbine (WT).

12. A control method for a renewable energy power plant (100), the power plant (100) comprising
- an energy generating system (10) configured to supply power to a utility grid (200) and having a wind farm (11) with at least one wind turbine (WT) and/or an energy storage system (12) with at least one energy storage device (SD), and
- a load system (20) configured to consume and transform energy provided from the energy generating system (10) and/or the utility grid (200) at each point of time and having at least one load (EL),
- a fault response system (300),
the method comprising the steps of
- monitoring the status of the energy generating system (10) ;
- monitoring the status of the load system (20); and
- generating an energy generating system power profile (DP₁₁, DP₁₂) in dependence of a given load system power profile (DP₂₀) following a voltage deviation of the utility grid (200) for controlling the energy generating system (10) based on the monitored statuses of the energy generating system (10) and the load system (20) to match a given power plant power profile (DP₁₀₀).

13. The method according to claim 12, wherein the power plant power profile (DP₁₀₀) is set such that, at each point of time following the voltage deviation, a power output of the power plant (100) does not exceed the power output before the voltage deviation.

14. The method according to claim 12 or 13, wherein the load system power profile (DP₂₀) is set such that, at each point of time following the voltage deviation, the power consumption of the load system (20) ramps up to the power consumption before the voltage deviation.

15. A computer program product with a program code, which is stored on a non-transitory machine-readable carrier, for carrying out the method according to the invention or one or more preferred embodiments thereof when the program code is executed on a computer.
